# EUROPEAN PATENT APPLICATION

(11) **EP 1 905 645 A1**
(43) Date of publication of application: **02.04.2008**
(21) Application number: 07100478.2
(22) Date of filing: 12.01.2007
(51) Int. Cl.: B60R 1/08

(54) **Adjustable Rear View Mirror Structure**

(30) Priority: 27.09.2006 US 535506
(71) Applicant: Lee, Kun-Ta, 222 Taipei, Hsien (TW)
(72) Inventor: Lee, Kun-Ta, 222 Taipei, Hsien (TW)
(74) Representative: Hayden, Nicholas Mark

(57) **Abstract**

An adjustable rear view mirror structure is provided. The rear view mirror structure (20) comprises a flexible body (21) and an adjusting apparatus (23) wherein the body has a reflective surface (211) and an inner surface (213). The adjusting apparatus (23) is disposed at a rear portion of the body (21) and is utilized to drive the inner surface (213) of the body (21). Thus, the reflective surface (211) of the body can form a particular curvature whereby the rear view mirror structure (20) can offer a wider viewing angle.

## Description

### Field of the Invention

The present invention relates to an adjustable structure of a rear view mirror. In particular, the invention relates to a structure of a rear view mirror with an adjustable mirror curvature.

### Descriptions of the Related Art

On various vehicles (such as cars, motorcycles, trucks, and etc.), the rear view mirror is a standard piece equipment. Using a car as an example, an inner rear view mirror and side rear view mirrors are usually equipped to help the driver be aware of situations behind and beside the car for increased safety during driving. However, due to the limited viewing angle of an ordinary rear view mirror, the driver encounters blind spots. To overcome this drawback, rear view mirrors with increased viewing angles are continuously presented in the market.

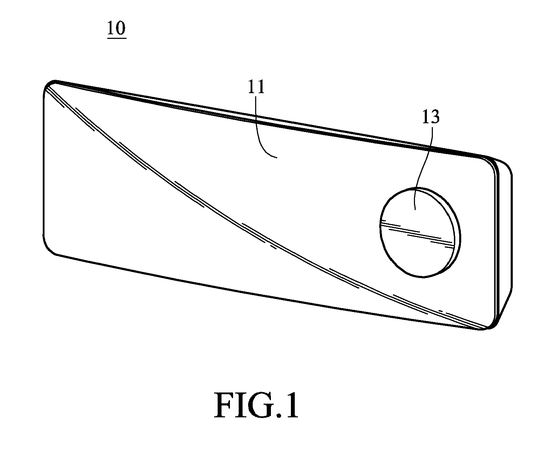

For example, in **FIG. 1,** a conventional rear view mirror **10** comprises a mirror **11** for providing a rear view visual with an ordinary viewing angle. Furthermore, a small convex reflective mirror **13** can be mounted onto the mirror **11.** Since the convex reflective mirror **13** has a curvature, drivers can partially have a wide viewing angle effect. By attaching the convex mirror to an ordinary mirror, the driver benefits from the combination of the ordinary viewing angle of the mirror **11** and the wide viewing angle of the convex reflective mirror **13.** As a result, the rear visuals are improved, creating a wider viewing angle with respect to cars from the side and behind for enhancing driving safety. Additionally, this mirror setup allows for a better view of the rear interior in the car in order to monitor the situations in the back-seat.

The abovementioned convex reflective mirror **13** can also be replaced by using a fixed rear view mirror with a set wide viewing angle and a large size. This fixed rear view mirror can be clipped onto the rear view mirror which has been originally equipped in the car to fully substitute the original rear view mirror.

Nevertheless, all of the current conventional designs do not simultaneously fulfill all of a user's particular requirements. Because the seat postures, heights, requirements for viewing angle, and usage habits are different between different drivers, the drivers have no choice but to use conventional rear view mirrors with certain limitations. The different habits between the drivers can not merely be fully satisfied by manually adjusting the angle of the rear view mirror **10** after the driver has entered the vehicle. Furthermore, not every driver is accustomed to the combined image (a large portion of a flat image with a small portion of a wide angle image) that is associated with the small convex reflective mirror **13** affixed to the mirror **11,** as seen in the rear view mirror **10.**

In addition, the adjustments on the conventional rear view mirror **10** only allow for horizontal and vertical rotation. The viewing angle of the mirror **11** is not adjustable so as to bring more limitations in use.

Given the above, a novel structure of a rear view mirror with an adjustable curvature needs to be developed in this field.

### SUMMARY OF THE INVENTION

The primary objective of this invention is to provide a structure for a rear view mirror with an adjustable mirror curvature. Thus, the adjustable viewing angle can meet different driving habits and requirements for various drivers to effectively improve driving visibility and safety.

Another objective of this invention is to provide a structure for a rear view mirror with an adjustable curvature. The structure may be widely applied in various vehicles and may also provide a wide viewing angle anywhere within the vehicles.

Yet another objective of this invention is to provide a structure for a rear view mirror with an adjustable curvature. The control mechanism for adjusting the curvature can be electrically powered, manually powered, or a combination of both. Thus, the level of equipment within the car can be indirectly upgraded according to the consumer's desires.

To achieve the aforementioned objectives, the present invention provides a structure for a rear view mirror comprising a flexible body and an adjusting mechanism. The flexible body has a reflective surface and an inner surface which is opposite to the reflective surface. The adjusting mechanism is disposed at the rear portion of the body to adjustably drive the inner surface of the flexible body so that the reflective surface of the body is adapted to a specific curvature.

The detailed technology and preferred embodiments implemented for the subject invention are described in the following paragraphs accompanying the appended figures for those skilled in this field to well appreciate the features of the claimed invention.

### BRIEF DESCRIPTION OF THE DRAWINGS

**FIG. 1** is a schematic view illustrating the external of a conventional rear view mirror;
**FIG. 2** is a front-decomposition schematic view illustrating a preferred embodiment of the present invention;
**FIG. 3** is a rear-decomposition schematic view of **FIG. 2;**
**FIG. 4A** is a cross-sectional bottom view of **FIG. 2,** in which the body has a curvature;
**FIG. 4B** is a schematic view similar to **FIG. 4A** but the body has no curvature;
**FIG. 5** is a schematic view illustrating another preferred embodiment of the control mechanism of **FIG. 2;**
**FIG. 6A** is a schematic view illustrating yet another preferred embodiment of the control mechanism of the present invention;
**FIG. 6B** is a cross-sectional bottom view of **FIG. 6A,** in which the body has a curvature;
**FIG. 7** is a schematic view illustrating a further preferred embodiment of the control mechanism of the present invention;
**FIG. 8** is an elevational view illustrating a further preferred embodiment of the present invention; and
**FIG. 9** is a perspective view illustrating the adjusting mechanism as shown in **FIG. 8.**

### DESCRIPTION OF THE PREFERRED EMBODIMENT

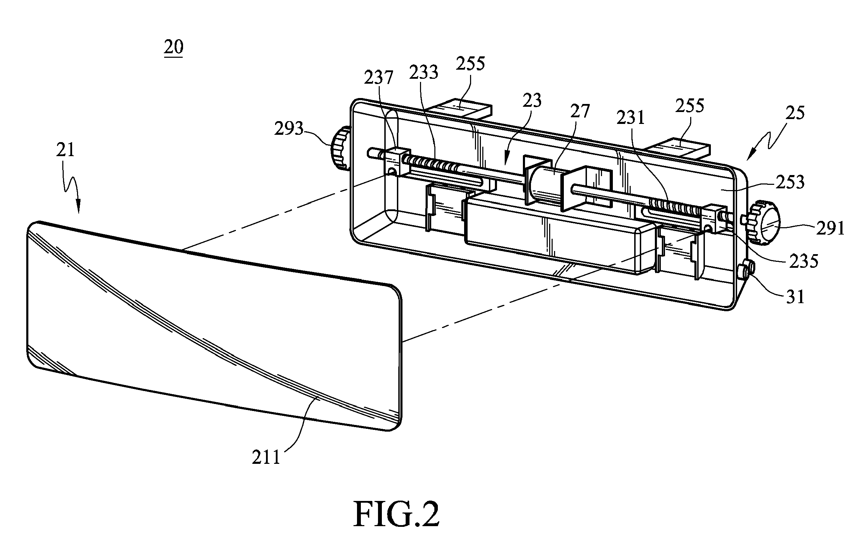

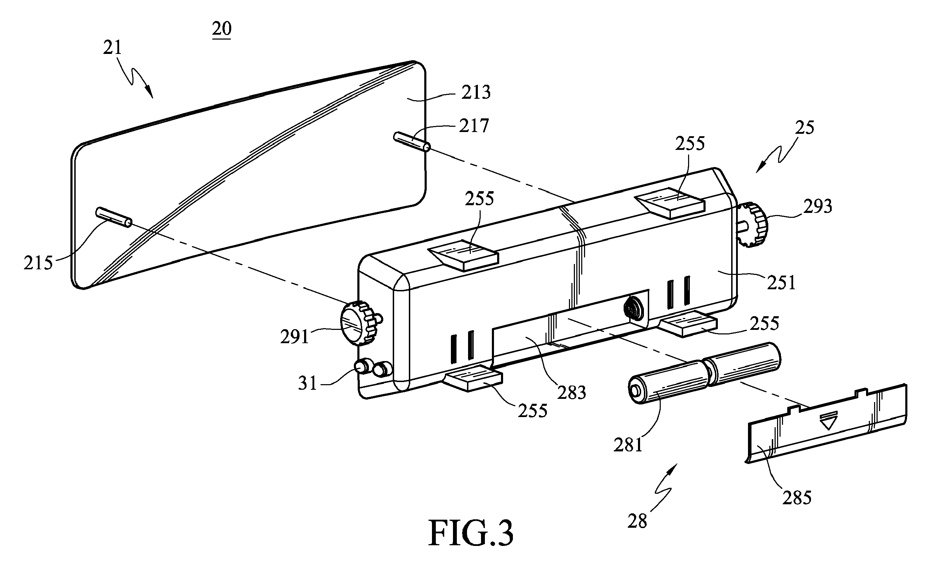

A preferred embodiment is shown in **FIG. 2** and **FIG. 3.** The rear view mirror structure **20** comprises a flexible body **21,** an adjusting mechanism **23,** and a housing **25,** wherein the housing **25** has a back plate **251** and an opening **253** to define a receiving space. The body **21** is substantially disposed at the opening **253** of the housing **25** after assembly, and the adjusting mechanism **23** is disposed at the rear portion of the body **21** and within the receiving space. The body **21** has a reflective surface **211** and an inner surface **213** opposite to the reflective surface **211.** The adjusting mechanism **23** is used for driving the inner surface **213** such that the reflective surface **211** of body **21** can perform a specific curvature. In addition, the housing **25** can also be selectively disposed onto other devices, such as the rear view mirror of an original vehicle accessory or other fastening components, through a plurality of protruding lugs **255.**

Referring to **FIG. 3,** in this embodiment, the body **21** further comprises a first rod **215** and a second rod **217** which are disposed on two side areas of the inner surface **213.** The first rod **215** and the second rod **217** extend backward, thus allowing the adjusting mechanism **23** to drive the first rod **215** and the second rod **217** to move relatively to adjust the curvature of the body **21.**

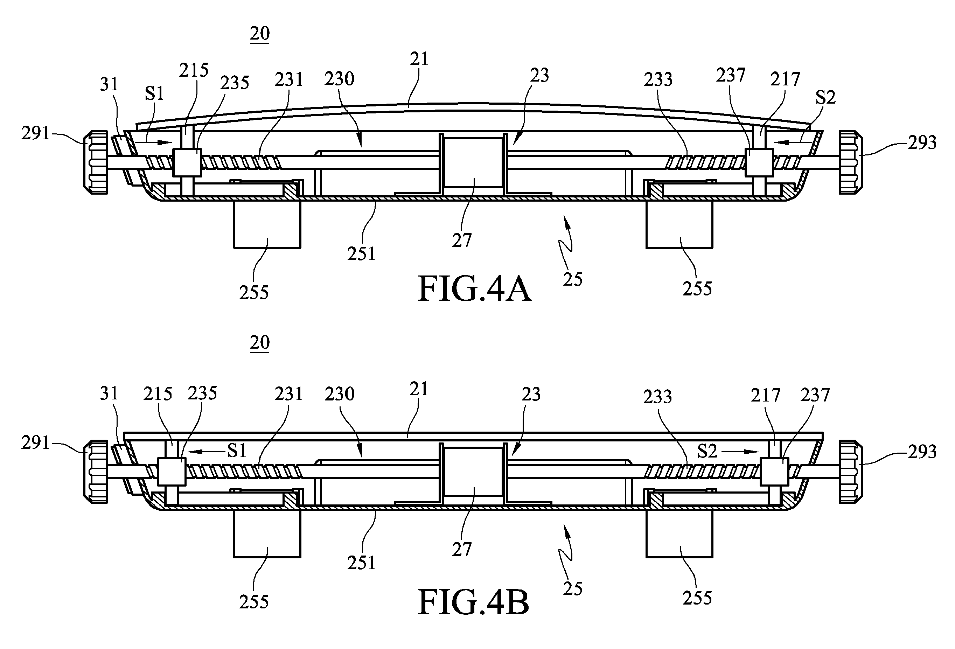

The detailed structure of the abovementioned adjusting mechanism **23** that drives the first rod **215** and the second rod **217** is shown in **FIG. 4A** and **FIG. 4B.** The adjusting mechanism **23** further comprises an adjusting device **230,** a first threaded element **235,** and a second threaded element **237,** wherein the first threaded element **235** and the second threaded element **237** are disposed at two sides of the receiving space, corresponding to the first rod **215** and the second rod **217** so as to engage onto the first rod **215** and the second rod **217** respectively. In addition, the adjusting device **230** has a first threaded portion **231** and a second threaded portion **233** which are oppositely formed.

Further, the first threaded portion **231** and the second threaded portion **233** are threaded within the first threaded element **235** and the second threaded element **237** respectively, in order that the first threaded element **235** is adapted to perform a first transverse movement **S1** corresponding to the first threaded portion **231** and the second threaded element **237** is adapted to perform a second transverse movement **S2** corresponding to the second threaded portion **233.** As shown in **FIG. 4A,** when the first transverse movement **S1** and the second transverse movement **S2** face to each other, the distance between the first threaded element **235** and the second threaded element **237** is shortened. Thus the distance between the first rod **215** and the second rod **217** is also shortened gradually, driving the body **21** to bend forward and obtain an increased curvature. As shown in **FIG. 4B,** when the first transverse movement **S1** and the second transverse movement **S2** separate apart from each other, a decreasing curvature is obtained. The curvature of the body **21** is adjustable by controlling the movement direction of the first threaded element **235** and the second threaded element **237** in this embodiment.

It is noted that the manner of controlling the adjusting mechanism **23** can be electrically powered, manually powered, or a combination of both. Using electrical power as an example, the adjusting mechanism **23** can further comprise a driving device **27** for driving the adjusting device **230** to perform the first transverse movement **S1** and/or the second transverse movement **S2.** Since the driving device **27** needs a power supply, the adjusting mechanism **23** can further comprise an electric power device **28** (as shown in **FIG. 3**) that is connected with the driving device **27.** It is understandable that the electric power device **28** can be a direct current (DC) power supply **281,** such as a battery, which is located in a battery container **283** with a cover **285** for protection.

In order to conveniently control the driving device **27** for the drivers, the adjusting mechanism **23** further comprises a switch **31** disposed on anywhere on the housing **25,** or anywhere in the car, for the driver to conveniently control the electric power device **28** for supplying electric power to the driving device **27,** thus to perform the curvature adjustment on the body **21.** In other embodiments, the manner of controlling the adjusting mechanism **23** can also be manually powered. In this case, the adjusting device **230** further comprises a first knob **291** and a second knob **293.** The first threaded portion **231** and the second threaded portion **233** protrude through two opposite side walls of the housing **25** and connect with the first knob **291** and the second knob **293** respectively. When the first knob **291** and/or the second knob **293** rotates, the aforementioned first transverse movement **S1** and the mentioned second transverse movement **S2** is adapted to be driven so as to alter the curvature of the body **21.**

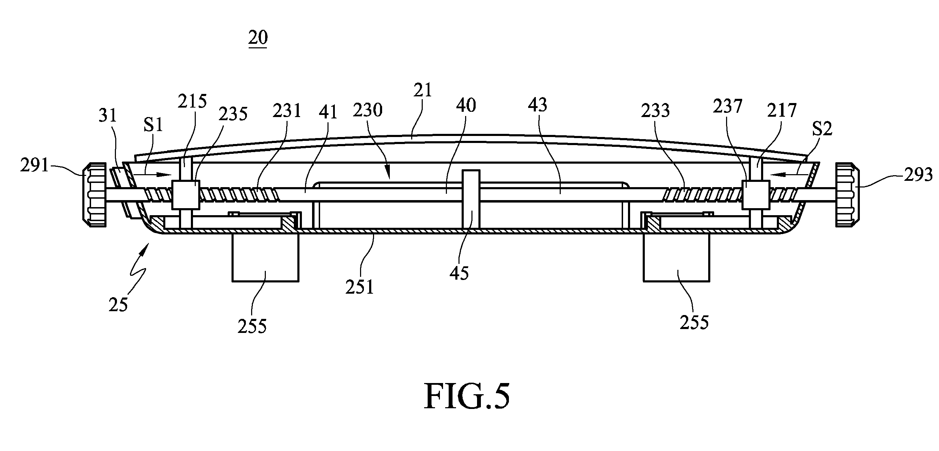

Another preferred embodiment of the present invention is shown in **FIG. 5,** wherein the adjusting device **230** comprises a screw rod **40,** and the aforementioned first threaded portion **231** and the second threaded portion **233** are respectively disposed on two opposite sides of the screw rod **40.** In detail, the first threaded portion **231** and the second threaded portion **233** have threads that are reversed to each other. As a result of the reversed threads, the first threaded element **235** and the second threaded element **237** are driven in opposite direction when the screw rod **40** rotates in a specific direction. That is, the first threaded element **235** performs the aforesaid first transverse movement **S1** and the second threaded element **237** performs the aforesaid second transverse movement **S2.**

The mentioned single screw rod **40** can be divided into several segments. That is, the screw rod **40** comprises a first screw rod **41** and a second screw rod **43,** which are connecting with each other by a middle column **45.** The aforementioned threaded portion **231** and the second threaded portion **233** are disposed on a first screw rod **41** and a second screw rod **43** respectively. In other words, the first screw rod **41** is disposed across between the middle column **45** and the side wall of the housing **25,** and the second screw rod **43** is disposed between the middle column **45** and the opposite side wall of the housing **25.** Similarly, when the first screw rod **41** and/or the second screw rod **43** rotates in a specific direction, the first threaded element **235** and the second threaded element **237** will be driven to perform the relative movements.

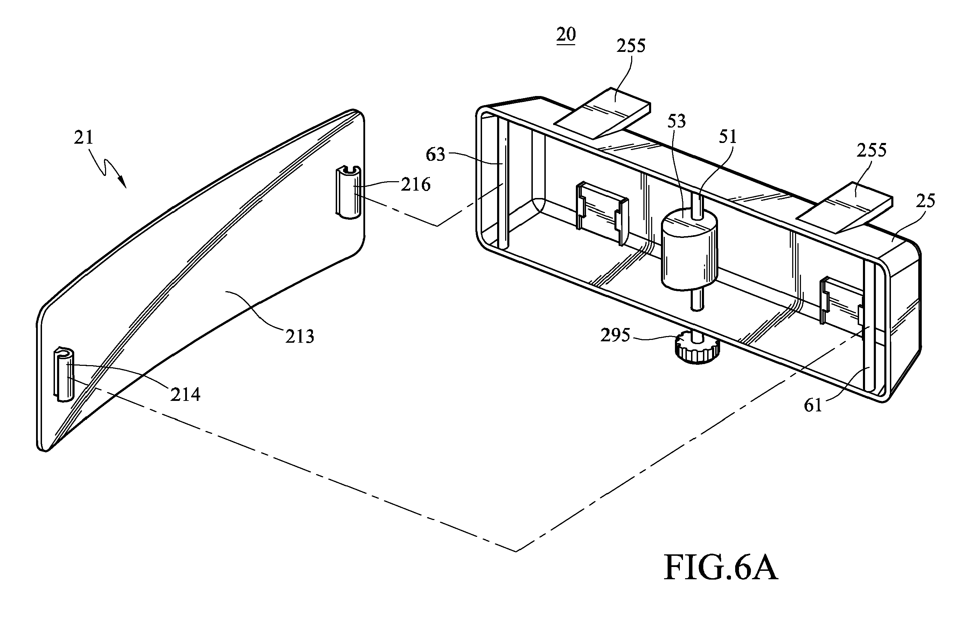

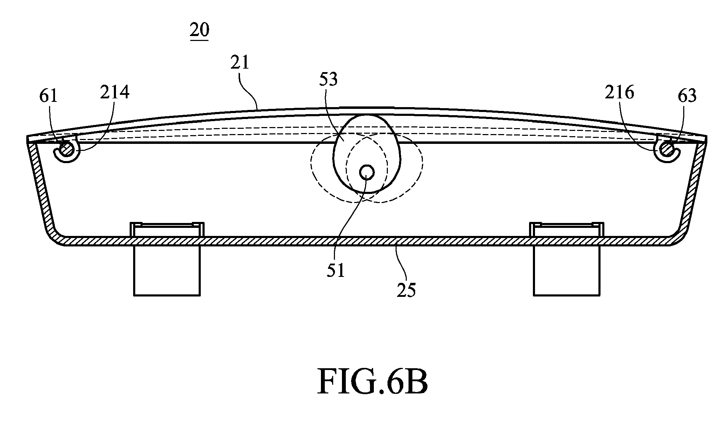

The adjusting mechanism **23** of the present invention is not limited to the abovementioned solutions. As shown in **FIG. 6A** and **FIG. 6B,** the adjusting mechanism **23** can be substituted by a rotating shaft **51** and a control block **53.** The rotating shaft **51** is vertically disposed in the receiving space and the control block **53** is eccentrically disposed on the rotating shaft **51,** wherein an outer edge of the control block **53** is substantially in contact with the inner surface **213** of the body **21.** With this eccentric design, the body **21** can be pushed to form a convex surface when the control block **53** rotates on the rotating shaft **51.** For simplification, a first distance and a second distance can be defined between the outer edge of the control block **53** and the rotating shaft **51,** wherein the first distance is the shortest distance between the outer edge and the rotating shaft **51,** and the second distance is the greatest distance between the outer edge and the rotating shaft **51.** When the distance between the rotating shaft **51** and the inner surface **213** is increasing from the first distance to the second distance, the body **21** can be pushed forward to form a variably increasing curvature. As shown in F**IG. 6B,** the control block **53** rotates on the rotating shaft **51** to push the inner surface **213** of the body **21.**

In order to easily control the rotation of the rotating shaft **51,** a knob **295** is disposed out of the housing **25** and connected to an end of the rotating shaft **51.** When the knob **295** rotates, it is adapted to drive the rotating shaft **51** for rotating the control block **53.** In addition, since the control block **53** substantially pushes the center of the inner surface **213** of the body **21,** two sides of the body **21** need to be fastened appropriately while the curvature of the body **21** is altered. Referring to **FIG. 6A** and **FIG. 6B** again, the rear view mirror structure **20** can further comprise two columns **61** and **63** which are individually disposed vertically in the receiving space. Two fastening lugs **214, 216** are individually disposed on two sides of the inner surface **213** of the body **21,** whereby the fastening lugs **214** and **216** are adapted to buckle with the columns **61, 63** to fasten the two sides of the body **213.**

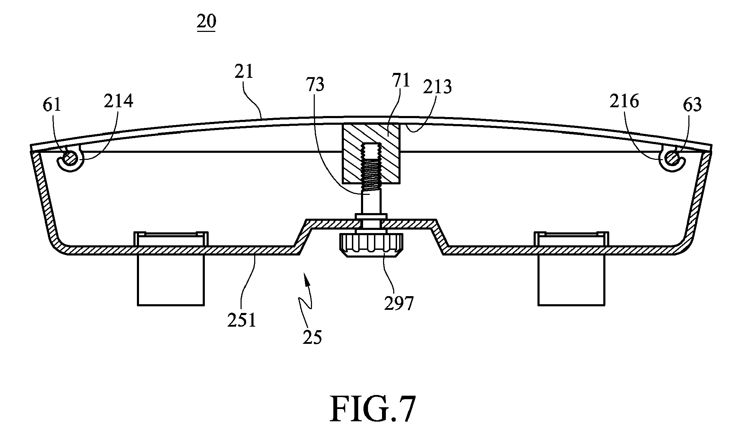

Another adjusting mechanism of the present invention is illustrated in **FIG. 7.** The adjusting mechanism comprises a pushing block **71,** a connecting element **73,** and a knob **297.** The pushing block **71** pushes against the inner surface **213** of the body **21.** The connecting element **73** has an end threaded with the pushing block **71** and an opposite end protruding out of the back plate **251** of the housing **25** to connect with the knob **297.** When the knob **297** rotates, the knob **297** is adapted to drive the connecting element **73** and pushes against the pushing block **71** to perform a reciprocating motion. Similarly, two fastening lugs **214, 216** should be disposed on two sides of the inner surface **213** of the body **21** to buckle with the columns **61, 63** to fasten the body **21** and help facilitate the curvature forming while the pushing block **71** pushes against the center of the body **21.**

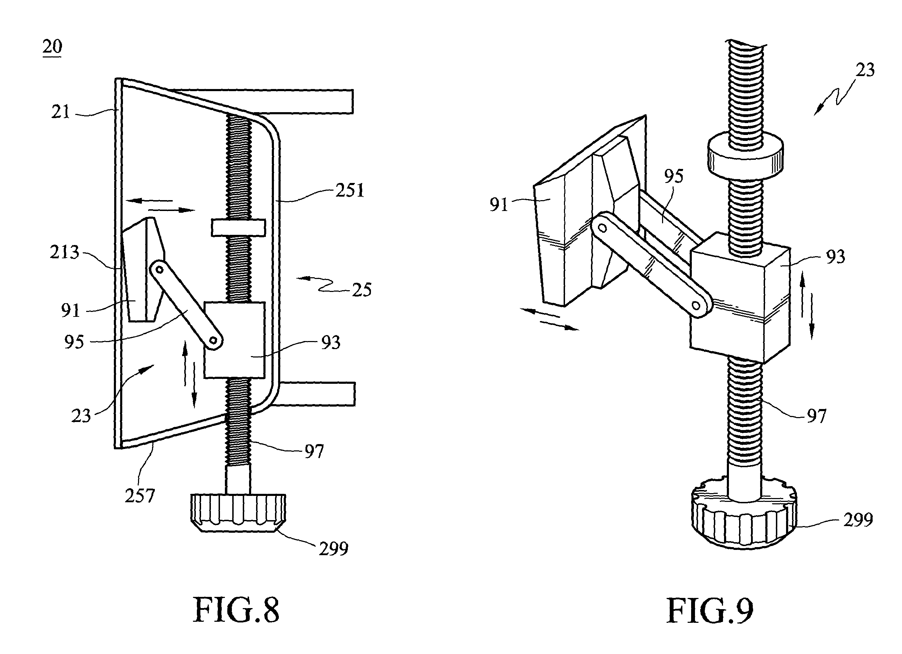

The abovementioned embodiments for adjusting the curvature of the body **21** should not be limited. As shown in **FIG. 8,** the adjusting mechanism **23** comprises a pushing block **91,** an adjusting element **93,** a linkage **95,** a vertical screw rod **97,** and a knob **299.** An end of the vertical screw rod **97** protrudes out of the back plate **257** of the housing and connects with the knob **299,** and the body of the vertical screw rod **97** is screwed within the adjusting element **93.**

Further referring to **FIG. 9,** which is a prospective view illustrating the adjusting mechanism **23** of this embodiment, when the knob **299** rotates, the vertical screw rod **97** is adapted to drive the adjusting element **93,** which is vertically disposed in the receiving space to perform an up-and-down movement from a first position to a second position. In association with the linkage **95** where one end pivots with the adjusting element **93** and the other opposite end pivots with the pushing block **91,** the pushing block **91** can push against the inner surface **213** of the body **21,** whereby the adjusting element driving the pushing block **91** to perform a forward movement when the adjusting element moves from the first position to the second position.

Similarly, the abovementioned two columns **61, 63** (not shown) are still disposed on two sides of the receiving space in the rear view mirror structure **20** of this embodiment. The abovementioned two fastening lugs **214, 216** are correspondingly disposed at two sides of the inner surface **213** of the body **21,** whereby the fastening lugs **214, 216** are adapted to buckle with the columns **61, 63** to fasten the two sides of the body.

According to the abovementioned structure of the rear view mirror, the curvature of the body can be adjusted electrically, manually, or both. The convex surface can gain a wide viewing angle effect while the concave surface can gain a focusing effect. Thereby, it can satisfy the different driving habits of different drivers, and also help the drivers control the situation behind and besides the car to ensure safe driving.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A structure of a rear view mirror, comprising:
a flexible body, having a reflective surface and an inner surface opposite to the reflective surface; and
an adjusting mechanism, disposed at a rear portion of the body, to adjustably drive the inner surface in order that the reflective surface of the body is adapted to present a specific curvature.

2. The structure of a rear view mirror as claimed in claim 1, further comprising:
a housing, having a back plate and an opening, the housing defining a receiving space;
wherein the body is substantially disposed at the opening of the housing and the adjusting mechanism is substantially disposed in the receiving space.

3. The structure of a rear view mirror as claimed in claim 1 or 2, wherein the body further comprises a first rod and a second rod which are disposed on two sides areas of the inner surface, respectively, and extending backward, and the adjusting mechanism drives the first rod and the second rod to move relatively to adjust the curvature of the body.

4. The structure of a rear view mirror as claimed in claim 3, wherein the adjusting mechanism further comprises:
a first threaded element and a second threaded element, disposed at two sides of the receiving space and corresponding to the first rod and the second rod, respectively;
an adjusting device, having a first threaded portion and a second threaded portion which are oppositely formed and respectively threaded within the first threaded element and the second threaded element, in order that the first threaded element is adapted to perform a first transverse movement corresponding to the first threaded portion, and the second threaded element is adapted to perform a second transverse movement corresponding to the second threaded portion, in which the first threaded element and the second threaded element engage onto the first rod and the second rod, respectively;
when the first transverse movement and the second transverse movement face to each other, the curvature of the body is increasing, whereas when the first transverse movement and the second transverse movement separate apart from each other, the curvature of the body is decreasing.

5. The structure of a rear view mirror as claimed in claim 4, wherein the adjusting mechanism further comprises a driving device adapted to drive the adjusting device to perform at least one of the first transverse movement and the second transverse movement.

6. The structure of a rear view mirror as claimed in claim 5, wherein the adjusting mechanism further comprises an electric power device, connecting with the driving device.

7. The structure of a rear view mirror as claimed in claim 6, wherein the adjusting mechanism further comprises a switch to control the electric power device.

8. The structure of a rear view mirror as claimed in claim 6 or 7, wherein the electric power device comprises a direct current (DC) power supply.

9. The structure of a rear view mirror as claimed in claim 4 or 5, wherein the adjusting device further comprises a first knob and a second knob, and the first threaded portion and the second threaded portion of the adjusting device protrude through two opposite side walls of the housing and connect with the first knob and the second knob, respectively; when at least one of the first knob and the second knob rotates, at least one of the first and second transverse movements is adapted to be driven in order to alter the curvature of the body.

10. The structure of a rear view mirror as claimed in claim 4, 5 or 9, wherein the adjusting device comprises a screw rod in which the first threaded portion and the second threaded portion are respectively disposed on two opposite sides thereof and have threads reversing to each other; when the screw rod rotates in a specific direction, the first transverse movement and the second transverse movement faces to each other.

11. The structure of a rear view mirror as claimed in claim 4, 5 or 9, wherein the adjusting device comprises a first screw rod, a second screw rod, and a middle column, the first threaded portion and the second threaded portion are disposed on the first screw rod and the second screw rod, respectively, in which the first screw rod is disposed across between the middle column and a side wall of the housing, and the second screw rod is disposed across between the middle column and the other opposite side wall of the housing.

12. The structure of a rear view mirror as claimed in claim 2, wherein the adjusting mechanism comprises:
a rotating shaft, vertically disposed in the receiving space;
a control block, eccentrically disposed on the rotating shaft, in which an outer edge of the control block is substantially in contact with the inner surface of the body and defines a first distance and a second distance with the rotating shaft, wherein the curvature of the body is increasing when the distance between the inner surface and the rotating shaft is increasing from the first distance to the second distance.

13. The structure of a rear view mirror as claimed in claim 12, further comprising a knob disposed out of the housing and connecting to an end of the rotating shaft, for driving the control block by rotating the knob.

14. The structure of a rear view mirror as claimed in claim 2, wherein the adjusting mechanism comprises:
a pushing block, pushing against the inner surface of the body;
a knob; and
a connecting element, having an end threaded with the pushing block and an opposite end protruding out of the back plate of the housing to connect with the knob;
whereby the knob rotates to drive the connecting element and push against the pushing block to perform a reciprocating motion when the knob rotates.

15. The structure of a rear view mirror as claimed in claim 2, wherein the adjusting mechanism comprises:
a pushing block, adapted to push against the inner surface of the body;
an adjusting element, vertically disposed in the receiving space to perform an up-and-down movement from a first position to a second position;
a linkage, having an end pivoting with the adjusting element and an opposite end pivoting with the pushing block;
whereby the adjusting element drives the pushing block to perform a forward movement when the adjusting element moves from the first position to the second position.

16. The structure of a rear view mirror as claimed in claim 15, further comprising:
a vertical screw rod, threaded in the adjusting element in which an end of the vertical screw rod protrudes outward a bottom plate of the housing;
a knob, disposed at the end of the vertical screw rod;
whereby the knob rotates to drive the adjusting element to perform the up-and-down movement.

17. The structure of a rear view mirror as claimed in claim 2, 12, 14 or 15, further comprising two columns independently disposed in the receiving space vertically, and two fastening lugs disposed on two sides of the inner surface of the body, respectively, whereby the fastening lugs respectively buckle with the columns to fasten the body.
